# EUROPEAN PATENT APPLICATION

(11) **EP 4 617 094 A1**
(43) Date of publication of application: **17.09.2025**
(21) Application number: 25161615.7
(22) Date of filing: 04.03.2025
(51) Int. Cl.: B60K 15/07

(54) **HYDROGEN-POWERED TRACKED VEHICLE**

(30) Priority: 12.03.2024 IT 202400005482
(71) Applicant: PRINOTH S.p.A., 39049 Vipiteno (BZ) (IT)
(72) Inventor: THOM, Jamie, 39049 VIPITENO (BZ) (IT)
(74) Representative: Studio Torta S.p.A.

(57) **Abstract**

A hydrogen-powered tracked vehicle extends along a longitudinal axis and comprises a frame (2); a driver cab (3) mounted on the frame (2); a first track (4) and a second track (5), which are configured to move the tracked vehicle (1) forward in a travel direction (D) substantially parallel to the longitudinal axis (A1); and a hydrogen storage (6; 14; 21) comprising a first supply tank (7; 15) and a second supply tank (8; 16), which are configured to contain hydrogen, extend along respective lateral axes (A2, A3) substantially parallel to the longitudinal axis (Al), and are arranged on opposite bands of the longitudinal axis (A1) at respective distances from the longitudinal axis (Al).

## Description

### CROSS-REFERENCE TO RELATED APPLICATIONS

This patent application claims priority from Italian patent application no. 102024000005482 filed on March 12, 2024, the entire disclosure of which is incorporated herein by reference.

### TECHNICAL FIELD

The present invention relates to a hydrogen-powered tracked vehicle.

### STATE OF THE ART

In the last decades, the increasing focus on reducing global pollution has led to the development of tracked vehicles equipped with alternative propulsion systems powered by renewable forms of energy. In particular, hydrogen-powered tracked vehicles have been developed.

As is known, a hydrogen-powered tracked vehicle comprises a first track and a second track, which are configured to move the tracked vehicle forward, a hydrogen storage provided with supply tanks containing hydrogen, and a propulsion system, which is powered by hydrogen provided by the hydrogen storage and is configured to transmit power to the first and to the second tracks.

In general, hydrogen-powered tracked vehicles allow limiting the emissions of pollutant gases. However, the supply tanks result to be bulky and occupy a considerable space on the tracked vehicle, limiting the operating potential of the tracked vehicle.

### SUBJECT-MATTER OF THE PATENT

An object of the present invention is to manufacture a hydrogen-powered tracked vehicle that mitigates the drawbacks of the prior art highlighted herein.

In accordance with the present invention, a hydrogen-powered tracked vehicle is manufactured, the tracked vehicle extending along a longitudinal axis and comprising:
- a frame;
- a driver cab mounted on the frame;
- a first track and a second track, which are configured to move the tracked vehicle forward in a travel direction substantially parallel to the longitudinal axis; and
- a hydrogen storage comprising a first supply tank and a second supply tank, which are configured to contain hydrogen, extend along respective lateral axes substantially parallel to the longitudinal axis, and are arranged on opposite bands of the longitudinal axis at respective distances from the longitudinal axis.

Thanks to the present invention, it is possible to arrange the supply tanks on the tracked vehicle so as to leave the rear view free for the operator of the tracked vehicle and to keep the central space behind the driver cab free to house possible additional equipment.

In particular, the tracked vehicle comprises a winch, which is mounted on the frame behind the driver cab with respect to the travel direction of the tracked vehicle and is arranged between the first and the second supply tanks.

In this manner, it is possible to allow the installation of a winch behind the driver cab, limiting the impact of the hydrogen storage on the dynamics and operation of the tracked vehicle.

From the operational point of view, it is possible to use the winch to facilitate the forward movement of the hydrogen-powered tracked vehicle along steep slopes and/or on rough terrain.

In particular, the first and the second supply tanks are removable from the tracked vehicle so as to allow the replacement of the supply tanks substantially lacking in hydrogen with supply tanks loaded with hydrogen.

Furthermore, the removal of the supply tanks allows easily carrying out maintenance operations on the parts of the tracked vehicle that are located below or behind the supply tanks and allows transporting the tracked vehicle on roads that require a limited maximum vehicle width.

In accordance with a first embodiment, the first and the second supply tanks are positioned on opposite sides of the driver cab with respect to the longitudinal axis.

In this manner, it is possible to limit the overall dimensions of the tracked vehicle in a vertical direction.

In accordance with a second embodiment, the first and the second supply tanks are arranged behind the driver cab with respect to the travel direction of the tracked vehicle.

In this manner, it is possible to limit the lateral overall dimensions of the tracked vehicle due to the supply tanks.

In particular, the hydrogen storage comprises a plurality of first supply tanks and a plurality of second supply tanks.

In accordance with a third embodiment, at least one of the first supply tanks is positioned behind the driver cab with respect to the travel direction of the tracked vehicle and at least one of the first supply tanks is positioned at a first side of the driver cab; at least one of the second supply tanks being positioned behind the driver cab with respect to the travel direction of the tracked vehicle and at least one of the second supply tanks being positioned at a second side of the driver cab opposite to the first side with respect to the longitudinal axis.

In this manner, it is possible to increase the amount of hydrogen stored in the hydrogen storage to extend the operating range of the tracked vehicle.

In accordance with a first variation of the present invention, the tracked vehicle comprises a fuel cell configured to receive hydrogen from the hydrogen storage and to generate electrical energy from the hydrogen received; and a propulsion system which is powered by electrical energy generated by the fuel cell and is configured to transmit power to the first and to the second tracks and/or to the winch.

In this manner, it is possible to utilize the hydrogen contained in the supply tanks to generate electrical energy and power the propulsion system of the tracked vehicle.

In accordance with a second variation of the present invention, the tracked vehicle comprises a hydrogen-powered internal combustion engine, which is configured to receive hydrogen from the hydrogen storage and to transmit power to the first and to the second tracks and/or to the winch.

In this manner, it is possible to utilize the hydrogen contained in the supply tanks to directly power the internal combustion engine.

### BRIEF DESCRIPTION OF THE FIGURES

Further characteristics and advantages of the present invention will become apparent from the following description of a non-limiting example embodiment, with reference to the accompanying Figures, wherein:
- Figure 1 is a perspective view, with parts removed for clarity, of a tracked vehicle manufactured in accordance with a first embodiment of the present invention
- Figure 2 is a plan view, with parts removed for clarity, of the tracked vehicle of Figure 1;
- Figure 3 is a plan view, with parts removed for clarity, of the tracked vehicle of Figure 1 manufactured in accordance with a second embodiment of the present invention;
- Figure 4 is a rear view, with parts removed for clarity, of the tracked vehicle of Figure 3;
- Figure 5 is a plan view, with parts removed for clarity, of the tracked vehicle of Figure 1 manufactured in accordance with a third embodiment of the present invention; and
- Figure 6 is a rear view, with parts removed for clarity, of the tracked vehicle of Figure 5.

### DETAILED DESCRIPTION OF THE FIGURES

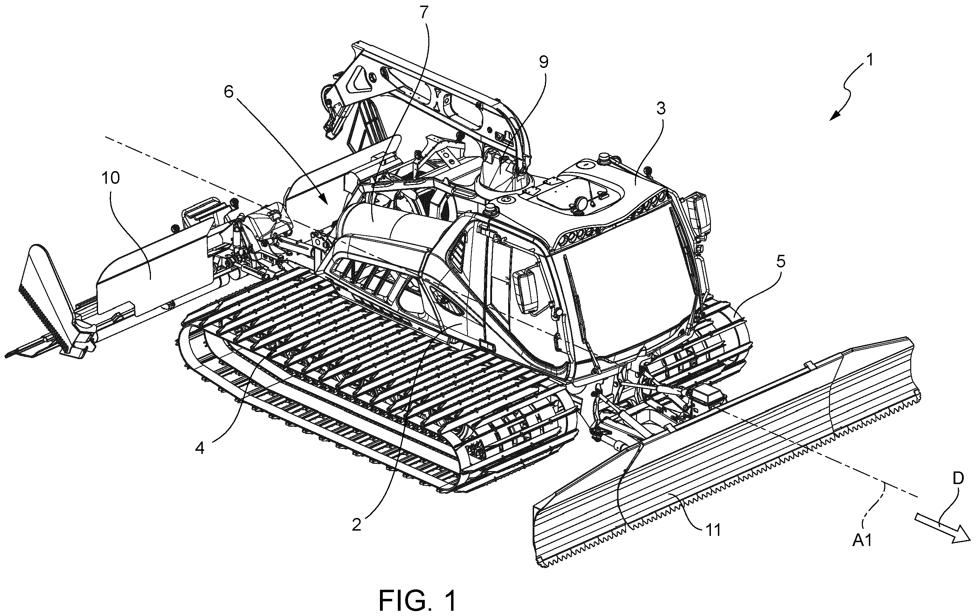

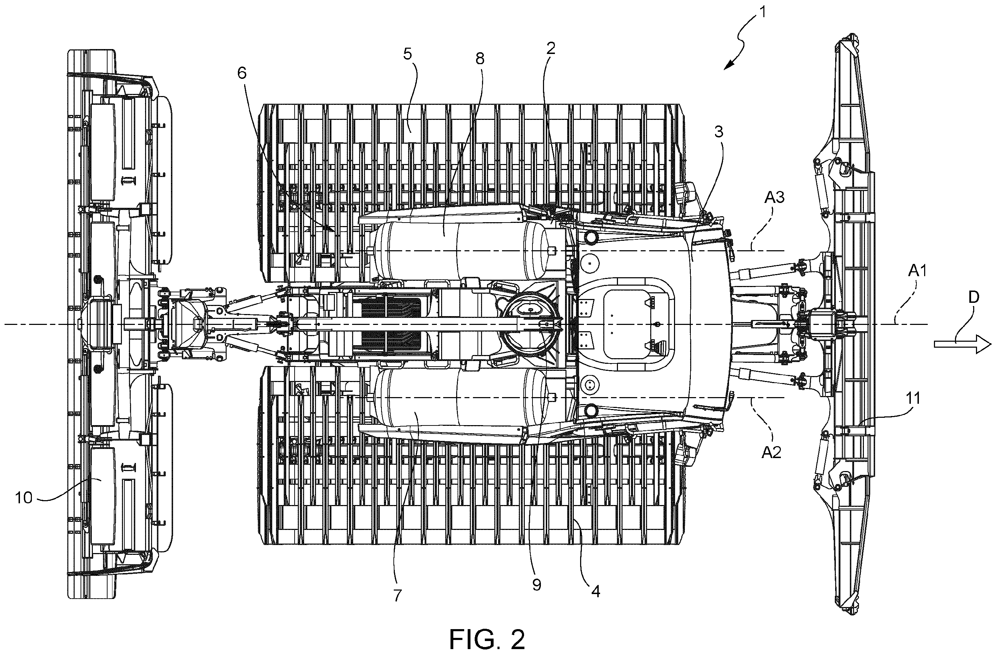

With reference to Figures 1 and 2, reference numeral 1 indicates, as a whole, a hydrogen-powered tracked vehicle.

In the case described and illustrated herein, the tracked vehicle 1 is used for preparing ski slopes. In particular, the tracked vehicle 1 is a snow groomer.

In more detail, the tracked vehicle 1 is used for preparing alpine ski slopes, and/or cross-country ski slopes, and/or ski jump ramps, and/or half pipe ski slopes, and/or snow-parks.

It is understood that, in accordance with a further embodiment, the tracked vehicle 1 can be used for operations in the agricultural sector, for example for collecting and/or moving agricultural products and/or for ensiling forage and/or for collecting and/or moving bagasse. According to such configuration, the tracked vehicle 1 can comprise a shredder preferably positioned on the front side of the tracked vehicle 1 and can be used for shredding vegetation.

In accordance with a further embodiment, the tracked vehicle 1 can be used for cleaning beaches and/or for working stretches of sand.

The tracked vehicle 1 extends along a longitudinal axis A1 and comprises a frame 2; a driver cab 3 mounted on the frame 2; a track 4 and a track 5, which are configured to move the tracked vehicle 1 forward in a travel direction D substantially parallel to the longitudinal axis A1; and a hydrogen storage 6 comprising a supply tank 7 and a supply tank 8 (visible in Figure 2), which are configured to contain hydrogen, extend along respective lateral axes A2, A3 substantially parallel to the longitudinal axis A1, and are arranged on opposite bands of the longitudinal axis A1 at respective distances from the longitudinal axis A1.

In particular, the tracked vehicle 1 comprises a winch 9, which is mounted on the frame 2 behind the driver cab 3 with respect to the travel direction D of the tracked vehicle 1 and is arranged between the supply tanks 7 and 8.

It is understood that, in accordance with a variation not shown in the accompanying Figures, the tracked vehicle 1 can lack the winch 9, without thereby departing from the scope of protection of the present invention.

Furthermore, the tracked vehicle 1 comprises a cutter 10 which is movably connected to a rear portion of the frame 2, and a shovel 11 which is movably connected to a front portion of the frame 2.

In particular, the driver cab 3 is arranged in the front part of the tracked vehicle 1 and faces the blade 11. The winch 9 is arranged in the rear part of the tracked vehicle 1, behind the driver cab 3.

In accordance with a first variation of the present invention, the tracked vehicle 1 comprises a fuel cell, not shown in the accompanying Figures, which is configured to receive hydrogen from the hydrogen storage 6 and to generate electrical energy from the hydrogen received; and a propulsion system, not shown in the accompanying Figures, which is powered by electrical energy generated by the fuel cell and is configured to transmit power to the tracks 4 and 5 and/or to the winch 9.

In accordance with a second variation of the present invention, the tracked vehicle 1 comprises a hydrogen-powered internal combustion engine, not shown in the accompanying Figures, which is configured to receive hydrogen from the hydrogen storage 6 and to transmit power to the tracks 4 and 5 and/or to the winch 9.

With reference to Figure 2, the winch 9 is interposed between the supply tanks 7 and 8. In other words, the supply tanks 7 and 8 are arranged on opposite bands of the winch 9 with respect to the longitudinal axis A1.

In particular, the tanks 7 and 8 are arranged at a substantially equal distance from the longitudinal axis A1.

In more detail, the supply tank 7 is arranged on top of the track 4 and the supply tank 8 is arranged on top of the track 5.

In practice, the supply tank 7 extends along the lateral axis A2, which is substantially parallel to the longitudinal axis A1 and is arranged at a distance from the longitudinal axis A1. The supply tank 8 extends along the lateral axis A3, which is substantially parallel to the longitudinal axis A1 and is arranged at a distance from the longitudinal axis A1.

Furthermore, the supply tanks 7 and 8 are removable from the tracked vehicle 1 so as to allow the replacement of the supply tanks 7 and 8 substantially lacking in hydrogen with supply tanks 7 and 8 loaded with hydrogen.

In accordance with a first embodiment, described and illustrated in Figure 2, the supply tanks 7 and 8 are arranged behind the driver cab 3 with respect to the travel direction D of the tracked vehicle 1. In practice, the supply tanks 7 and 8 are directly facing the winch 9.

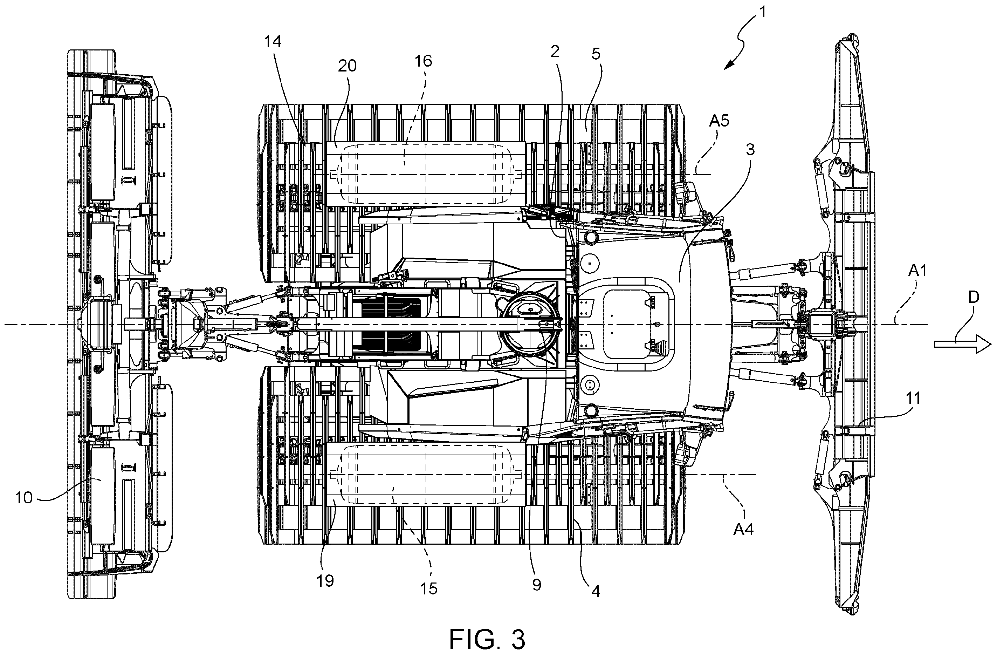

With reference to Figure 3, a second embodiment of the present invention is shown, wherein the tracked vehicle 1 comprises a hydrogen storage 14 provided with a supply tank 15 and a supply tank 16.

In accordance with such embodiment, the supply tanks 15 and 16 are positioned on opposite sides of the driver cab 3 with respect to the longitudinal axis A1.

In particular, the supply tank 15 extends along a lateral axis A4, which is substantially parallel to the longitudinal axis A1 and is arranged at a distance from the longitudinal axis A1. The supply tank 16 extends along a lateral axis A5, which is substantially parallel to the longitudinal axis A1 and is arranged at a distance from the longitudinal axis A1.

In greater detail, the supply tanks 15 and 16 are removable from the tracked vehicle 1 so as to allow the replacement of the supply tanks 15 and 16 substantially lacking in hydrogen with supply tanks 15 and 16 loaded with hydrogen.

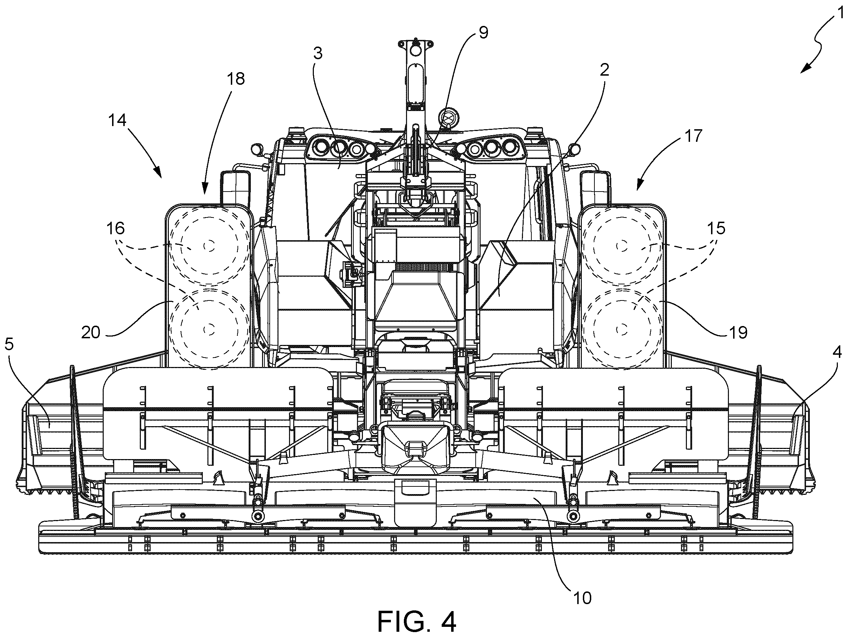

With reference to Figure 4, the hydrogen storage 14 comprises a plurality of supply tanks 15 arranged on top of one another, and a plurality of supply tanks 16 arranged on top of one another.

In other words, the hydrogen storage 14 comprises a plurality of supply tanks 15 superimposed so as to form a stack of tanks 17 and a plurality of supply tanks 16 superimposed so as to form a stack of tanks 18.

In the non-limiting case of the present invention described and illustrated herein, the hydrogen storage 14 comprises two supply tanks 15 and two supply tanks 16.

It is understood that the number of the supply tanks 15 and 16 can vary depending on the operating needs of the tracked vehicle 1 and, in particular, can be less than or greater than two.

Furthermore, the hydrogen storage 14 comprises a container 19, which contains the superimposed supply tanks 15, and a container 20, which contains the superimposed second supply tanks 16.

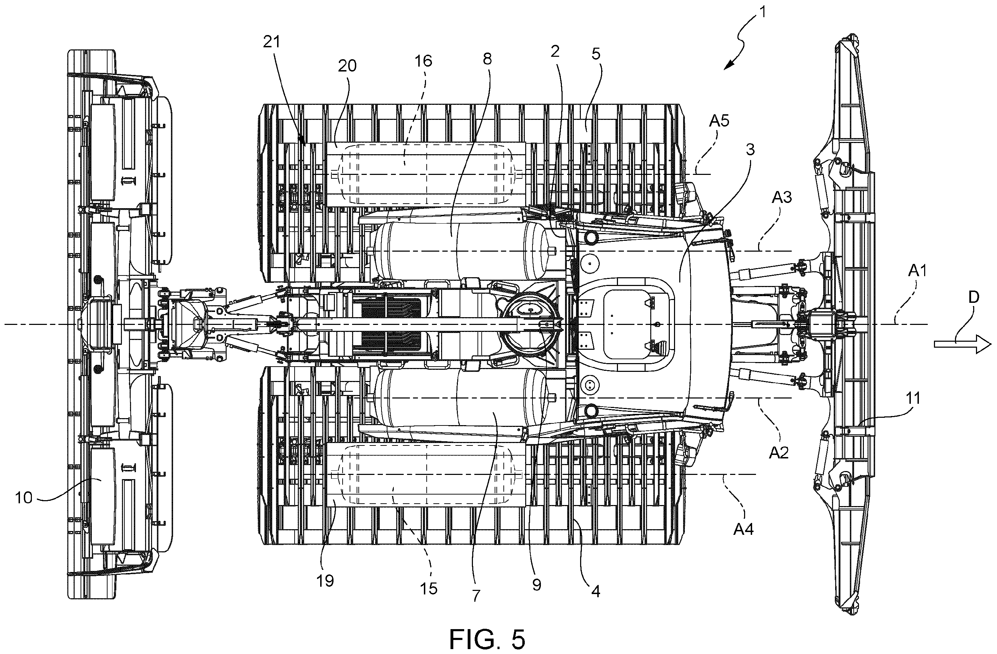

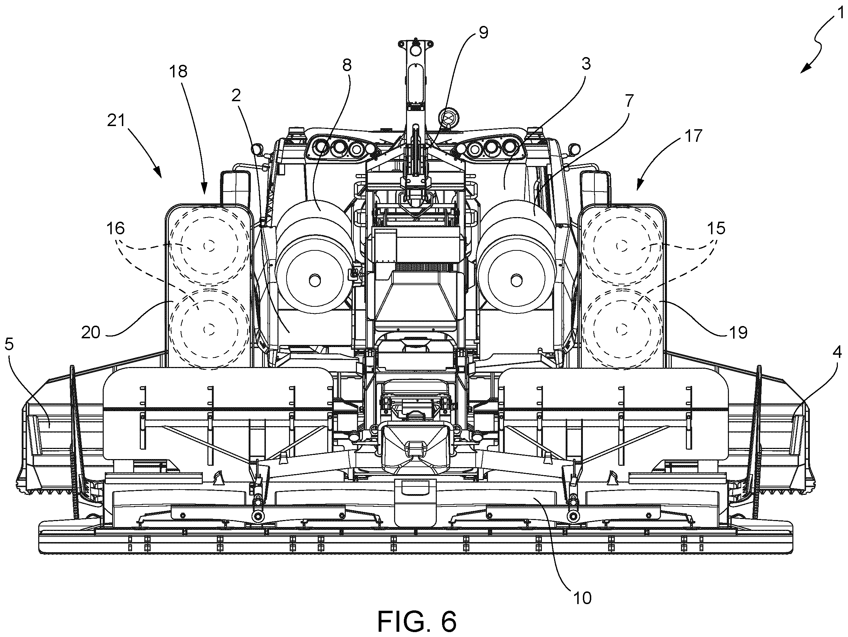

With reference to Figures 5 and 6, a third embodiment of the present invention is shown, wherein the tracked vehicle 1 comprises a hydrogen storage 21 provided with a supply tank 7, a supply tank 8, a plurality of supply tanks 15 and a plurality of supply tanks 16.

In particular, the supply tanks 7 and 8 are positioned behind the driver cab 3 with respect to the travel direction D of the tracked vehicle 1. The supply tanks 15 and 16 are positioned on opposite sides of the driver cab 3 with respect to the longitudinal axis A1.

With reference to Figure 5, the supply tanks 7 and 8 are arranged at a first distance from the longitudinal axis A1 and the supply tanks 15 and 16 are arranged at a second distance from the longitudinal axis A1 greater than the first distance.

With reference to Figure 6, the supply tanks 15 are arranged on top of one another and the supply tanks 16 are arranged on top of one another.

It is understood that the number and the arrangement of the supply tanks 7, 8, 15 and 16 can vary depending on the operating needs of the tracked vehicle 1.

It is clear that variations can be made to the present invention without thereby departing from the scope of protection of the appended claims.

## Claims

1. A hydrogen-powered tracked vehicle, the tracked vehicle (1) extending along a longitudinal axis (A1) and comprising:
- a frame (2);
- a driver cab (3) mounted on the frame (2);
- a first track (4) and a second track (5), which are configured to move the tracked vehicle (1) forward in a travel direction (D) substantially parallel to the longitudinal axis (A1); and
- a hydrogen storage (6; 14; 21) comprising a first supply tank (7; 15) and a second supply tank (8; 16), which are configured to contain hydrogen, extend along respective lateral axes (A2, A3; A4, A5) substantially parallel to the longitudinal axis (A1), and are arranged on opposite bands of the longitudinal axis (A1) at respective distances from the longitudinal axis (A1).

2. The tracked vehicle as claimed in claim 1, and comprising a winch (9), which is mounted on the frame (2) behind the driver cab (3) with respect to the travel direction (D) of the tracked vehicle (1) and is arranged between the first supply tank (7; 15) and the second supply tank (8; 16).

3. The tracked vehicle as claimed in claim 2, wherein the first and the second supply tanks (7, 8; 15, 16) are arranged on opposite bands of the winch (9) with respect to the longitudinal axis (A1).

4. The tracked vehicle as claimed in any one of the foregoing claims, wherein the first and the second supply tanks (7, 8; 15, 16) are removable from the tracked vehicle (1).

5. The tracked vehicle as claimed in any one of the foregoing claims, wherein the first supply tank (7; 15) is arranged on top of the first track (4) and the second supply tank (8; 16) is arranged on top of the second track (5).

6. The tracked vehicle as claimed in any one of the foregoing claims, wherein the first and the second supply tanks (15, 16) are arranged behind the driver cab (3) with respect to the travel direction (D) of the tracked vehicle (1).

7. The tracked vehicle as claimed in any one of claims 1 to 5, wherein the first and the second supply tanks (7, 8) are positioned on opposite sides of the driver cab (3) with respect to the longitudinal axis (A1).

8. The tracked vehicle as claimed in any one of the foregoing claims, wherein the hydrogen storage (14; 21) comprises a plurality of first supply tanks (7, 15) and a plurality of second supply tanks (8, 16).

9. The tracked vehicle as claimed in claim 8, wherein at least one of the first supply tanks (7) is positioned behind the driver cab (3) with respect to the travel direction (D) of the tracked vehicle (1) and at least one of the first supply tanks (15) is positioned at a first side of the driver cab (3); at least one of the second supply tanks (8) being positioned behind the driver cab (3) with respect to the travel direction (D) of the tracked vehicle (1) and at least one of the second supply tanks (16) being positioned at a second side of the driver cab (3) opposite to the first side with respect to the longitudinal axis (A1).

10. The tracked vehicle as claimed in claim 8 or 9, wherein the first supply tanks (15) are arranged on top of each other and the second supply tanks (16) are arranged on top of each other.

11. The tracked vehicle as claimed in any one of the foregoing claims, and comprising a fuel cell configured to receive hydrogen from the hydrogen storage (6; 14; 21) and to generate electrical energy from the hydrogen received; and a propulsion system, which is powered by electrical energy generated by the fuel cell and is configured to transmit power to the first and to the second tracks (4, 5) and/or to the winch (9).

12. The tracked vehicle as claimed in any one of claims 1 to 10, and comprising a hydrogen-powered internal combustion engine, which is configured to receive hydrogen from the hydrogen storage (6; 14; 21) and to transmit power to the first and to the second tracks (4, 5) and/or to the winch (9).
